# EUROPEAN PATENT APPLICATION

(11) **EP 4 760 925 A1**
(43) Date of publication of application: **17.06.2026**
(21) Application number: 25752470.2
(22) Date of filing: 07.02.2025
(51) Int. Cl.: H01M 50/244, H01M 50/595, H01M 10/6551, H01M 50/273, H01M 50/291, H01M 50/271

(54) **BATTERY PACK**

(30) Priority: 08.02.2024 KR 20240019546; 30.10.2024 KR 20240151325
(71) Applicant: LG Energy Solution, Ltd., Seoul 07335 (KR)
(72) Inventor: KIM, Dae Gil, Daejeon 34122 (KR); HAN, Nyeon Gu, Daejeon 34122 (KR); JANG, Byung Do, Daejeon 34122 (KR); SHIN, Ju Hwan, Daejeon 34122 (KR); KIM, Ki Young, Daejeon 34122 (KR)
(74) Representative: Plasseraud IP
(86) International application number: PCT/KR2025/001828
(87) International publication number: WO 2025/170360

(57) **Abstract**

Embodiments provide a battery pack. The battery pack includes a base plate, a thermal interface material (TIM) layer on the base plate, and a battery cell assembly on the TIM layer, and the battery cell assembly includes a plurality of battery cells arranged in a first direction, first and second side beams spaced apart from each other in the first direction with the plurality of battery cells between the first and second side beams, and a lifting band coupled to the first and second side beams.

## Description

### [Technical Field]

The present disclosure relates to a battery pack. The present application claims the benefit of priority based on Korean Patent Application No. 10-2024-0019546, filed on February 8, 2024 and Korean Patent Application No. 10-2024-0151325, filed on October 30, 2024, and the entire contents of the Korean patent applications are incorporated herein by reference.

### [Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

A trend in the development of technology for secondary batteries for mobility is an improvement in energy density and safety. Here, the energy density of a secondary battery is a value obtained by dividing a maximum level of electrical energy that the secondary battery may store by the mass of the secondary battery. A high energy density of the secondary battery is directly related to the driving efficiency and range of mobility, and thus various studies are being conducted to improve the energy density of secondary batteries.

### [Disclosure]

### [Technical Problem]

The present disclosure is directed to providing a battery pack for which after-sales services are available.

### [Technical Solution]

Embodiments provide a battery pack. The battery pack includes a base plate, a thermal interface material (TIM) layer on the base plate, and a battery cell assembly on the TIM layer, and the battery cell assembly includes a plurality of battery cells arranged in a first direction, first and second side beams spaced apart from each other in the first direction with the plurality of battery cells therebetween, and a lifting band coupled to the first and second side beams.

The lifting band may include a first portion between the base plate and the plurality of battery cells.

The first portion of the lifting band may be at the same level as the TIM layer with respect to a mounting surface of the base plate.

The lifting band may further include a second portion connected to the first portion and covering the first side beam, and a third portion connected to the first portion and covering the second side beam.

The lifting band further may include a fourth portion connected to the second portion and including a bolting hole, and a fifth portion connected to the third portion and including a bolting hole.

The battery pack may further include a cross-beam on the base plate, and the cross-beam may extend in a second direction perpendicular to the first direction.

The cross-beam may include a groove into which the fourth portion of the lifting band is inserted.

The battery cell assembly may include a fixing device that fixes the lifting band and the first side beam to be fixed to each other.

The battery pack may further include a first friction relief sheet between the cross-beam and the first side beam.

The battery pack may further include a second friction relief sheet between the cross-beam and the first side beam.

The first friction relief sheet may be adhered to the first side beam, and the second friction relief sheet may be adhered to the cross-beam.

The battery pack may further include a tape between the TIM layer and the base plate.

The tape may include aluminum.

The tape may include the same material as the base plate.

Embodiments provide a battery pack. The battery pack includes: a base plate; a cross-beam on the base plate; a TIM layer on the base plate; a battery cell assembly provided on the TIM layer and including a plurality of battery cells, first and second side beams spaced apart from each other in a first direction with the plurality of battery cells interposed therebetween, and a lifting band coupled to the first and second side beams; and a first friction relief sheet between the cross-beam and the first side beam.

The first friction relief sheet may be adhered to the cross-beam or the first side beam.

The battery pack may further include a second friction relief sheet between the cross-beam and the first side beam.

The first friction relief sheet may be adhered to the first side beam, and the second friction relief sheet may be adhered to the cross-beam.

### [Advantageous Effects]

According to embodiments of the present disclosure, a battery pack includes a battery cell assembly including a tape between a thermal interface material (TIM) layer and a base plate and a lifting band. Accordingly, when a quality issue occurs in some of battery cell assemblies, the battery cell assemblies in which the quality issue occurs can be separated and replaced.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIG. 1 is a perspective view of a battery pack according to embodiments.
FIG. 2 is an exploded perspective view of a battery pack according to embodiments.
FIG. 3 is a partial perspective view of a battery pack according to embodiments.
FIG. 4 is a perspective view of a lifting band of a battery cell assembly according to embodiments.
FIG. 5 is a cross-sectional view taken along line 1I-1I' of FIG. 1.
FIG. 6 is a cross-sectional view taken along line 1II-1II' of FIG. 1.
FIG. 7 is a cross-sectional view for describing a battery pack according to other embodiments.
FIG. 8 is a cross-sectional view for describing a battery pack according to other embodiments.
FIG. 9 is a flowchart of a secondary battery manufacturing method according to embodiments.
FIGS. 10 to 16 are cross-sectional views for describing a secondary battery manufacturing method according to embodiments.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

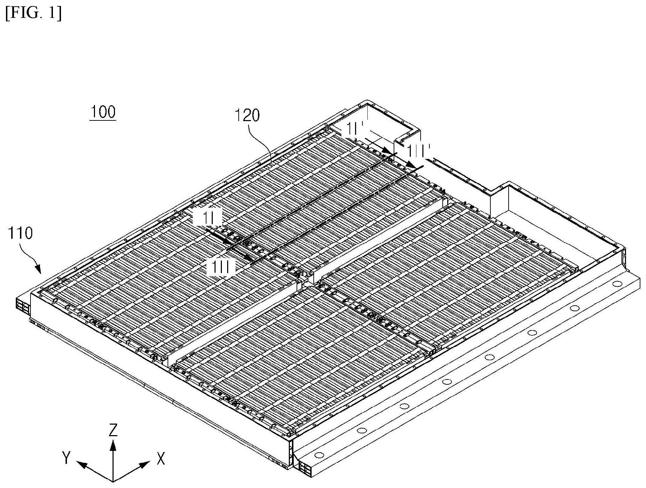

FIG. 1 is a perspective view of a battery pack 100 according to embodiments.

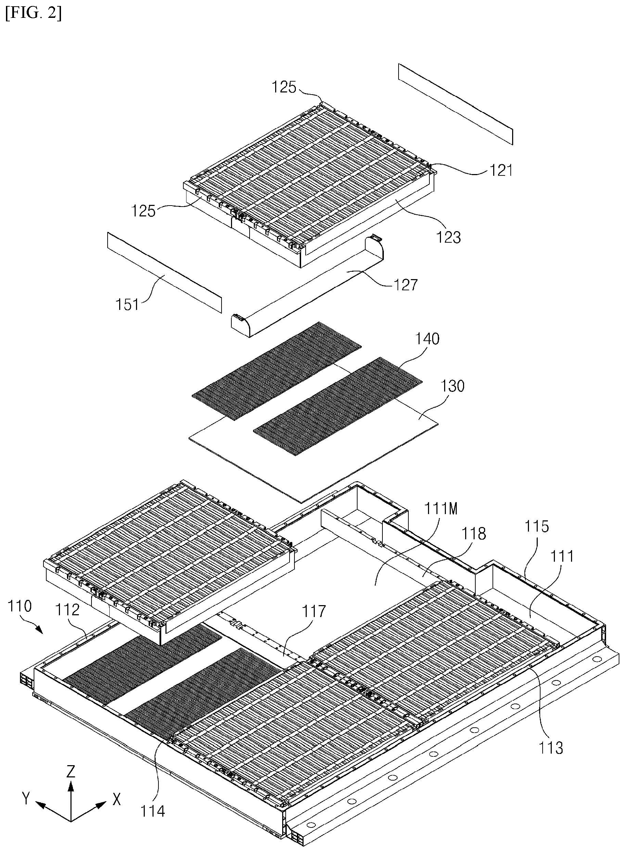

FIG. 2 is an exploded perspective view of the battery pack 100 according to embodiments.

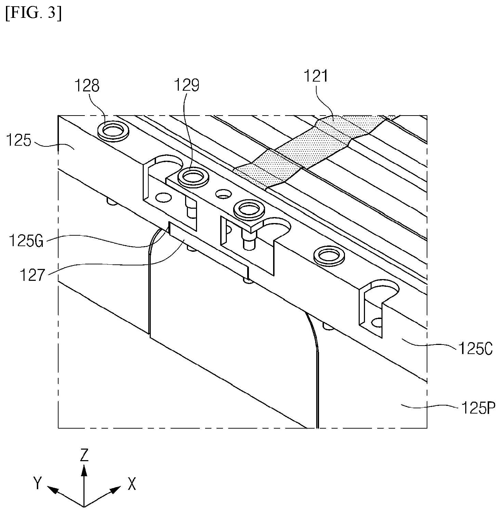

FIG. 3 is a partial perspective view of the battery pack 100 according to embodiments.

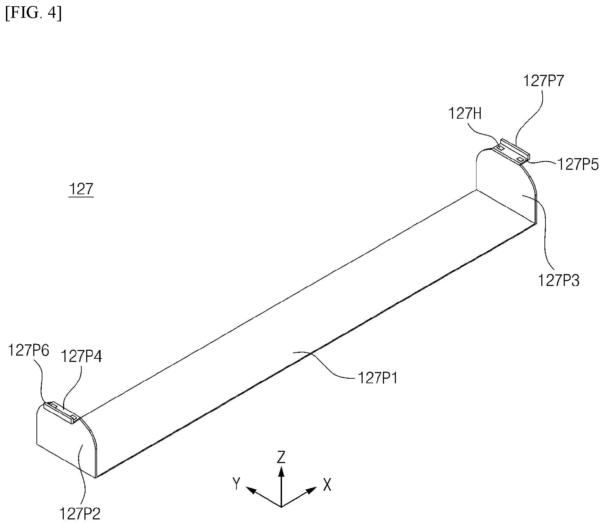

FIG. 4 is a perspective view of a lifting band 127 of a battery cell assembly 120 according to embodiments.

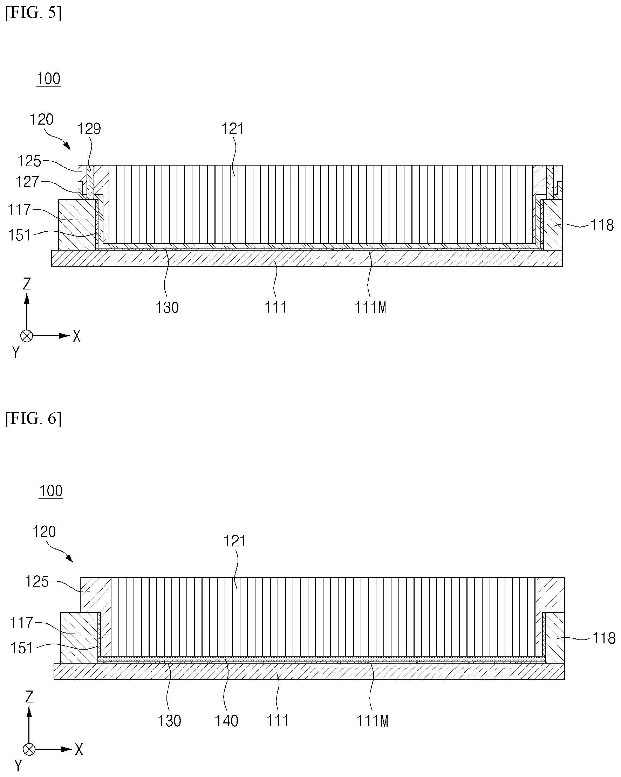

FIG. 5 is a cross-sectional view taken along line 1I-1I' of FIG. 1.

FIG. 6 is a cross-sectional view taken along line 1II-1II' of FIG. 1.

Referring to FIGS. 1 to 6, the battery pack 100 may include a pack housing 110, a plurality of battery cell assemblies 120, tapes 130, thermal interface material (TIM) layers 140, and friction relief sheets 151. The battery pack 100 is a final form of a battery system to be mounted in a mobility or the like.

The pack housing 110 may include a base plate 111 and side walls 112, 113, 114, and 115. Here, two directions substantially parallel to a mounting surface 111M of the base plate 111 are defined as an X-axis direction and a Y-axis direction, and a direction substantially perpendicular to the mounting surface 111M of the base plate 111 is defined as a Z-axis direction. The X-axis direction, the Y-axis direction, and the Z-axis direction may be substantially perpendicular to one another.

The base plate 111 may have a flat plate shape. The side walls 112, 113, 114, and 115 may be substantially perpendicular to the base plate 111. The side walls 112, 113, 114, and 115 may be adjacent to edge portions of the base plate 111. The side walls 112, 113, 114, and 115 may be coupled to the edge portions of the base plate 111.

The base plate 111 may include a plurality of plates coupled to each other by friction stir welding. Each of the plurality of plates of the base plate 111 and the side walls 112 and 113 may be provided by an extrusion process. The side walls 114 and 115 may also be provided by the extrusion process.

The base plate 111 may further include a center beam 116 and cross-beams 117 and 118. According to embodiments, the center beam 116 may extend in the Y-axis direction. The center beam 116 may be included in one of the plurality of plates of the base plate 111 and be formed by the extrusion process, together with one of the plurality of plates of the base plate 111 or welded to one of the plurality of plates of the base plate 111.

The center beam 116 and the cross-beams 117 and 118 may partition a space in which the battery cell assembly 120 is mounted. The center beam 116 may be surrounded by the side walls 112, 113, 114, and 115. Accordingly, the center beam 116 may partition a space defined by the pack housing 110.

The center beam 116 may isolate the battery cell assemblies 120 in the Y-axis direction. The center beam 116 may be interposed between the battery cell assemblies 120 in the Y-axis direction. The cross-beams 117 and 118 may isolate the plurality of battery cell assemblies 120 in the X-axis direction. The cross-beam 117 may be interposed between the battery cell assemblies 120 in the X-axis direction. The cross-beam 118 may be interposed between the battery cell assemblies 120 and the side wall 115.

The plurality of battery cell assemblies 120 may be on the mounting surface 111M of the base plate 111 of the pack housing 110. The battery cell assemblies 120 may be arranged in the X-axis direction and the Y-axis direction. In the present example, three battery cell assemblies 120 are arranged in the X-axis direction and two battery cell assemblies 120 are arranged in the Y-axis direction such that the plurality of battery cell assemblies 120 form a matrix of two rows and three columns, but the technical idea of the present disclosure should not be understood as being limited thereto in any sense.

The base plate 111 may support the plurality of battery cell assemblies 120. The side walls 112, 113, 114, and 115 may horizontally surround the plurality of battery cell assemblies 120.

Hereinafter, the technical idea of the present disclosure will be described with reference to an embodiment in which the battery pack 100 is of a moduleless type and each of the plurality of battery cell assemblies 120 does not include a module frame. However, the embodiment is a non-limiting example and should not be understood as limiting the technical idea of the present disclosure in any sense. Based on the above description, technicians of ordinary skill in the art will be able to easily derive a plurality of battery cell assemblies each including a module frame and a module type battery pack including the plurality of battery cell assemblies.

Each of the plurality of battery cell assemblies 120 may include a plurality of battery cells 121, an integrated circuit assembly 123, side beams 125, a lifting band 127, and fixing devices 128 and 129.

Each of the plurality of battery cells 121 may include an electrode assembly, an electrolyte, and a case. Each of the plurality of battery cells 121 may be a cylindrical battery cell, a prismatic battery cell, or a pouch type battery cell. An electrode assembly of the cylindrical battery cell is embedded in the cylindrical metal can. An electrode assembly of the prismatic battery cell is embedded in the prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. A jelly roll type electrode assembly is manufactured by winding a positive electrode, a negative electrode, and a separator interposed therebetween. A stack type electrode assembly may include a plurality of positive electrodes and a plurality of negative electrodes that are stacked sequentially, and a plurality of separators interposed therebetween.

According to embodiments, the plurality of battery cells 121 may form a plurality of banks. The plurality of banks may include one or more battery cells 121 connected in parallel. The plurality of banks may be connected to each other in series. The number of battery cells 121 included in each of the plurality of banks and the number of banks connected to each other in series may be determined by a voltage and a current to be output through each of the plurality of battery cell assemblies 120.

According to embodiments, a cell stack may further include a plurality of separators. The plurality of separators may be interposed between the plurality of battery cells 121. The plurality of separators may include an elastic material and absorb swelling the plurality of battery cells. According to embodiments, the plurality of separators may be thermal barriers. According to embodiments, each of the plurality of separators may have high melting temperature and low thermal conductivity. According to embodiments, each of the plurality of separators may include a flame retardant material such as ceramic and a coated glass material. According to embodiments, the plurality of separators may be configured to discharge a fire retarding material and a fire extinguishing agent when a thermal runaway event occurs.

The integrated circuit assembly 123 may include an insulating frame, an integrated circuit, bus bars, sensing plates, sensing bars, temperature sensors, wires, and an insulating cover. The integrated circuit assembly 123 may provide electrical connection between the plurality of battery cells 121, output resulting voltages of the plurality of battery cells 121, and include physical and functional components for measuring voltages (or currents) of nodes inside a circuit composed of the plurality of battery cells 121.

The insulating frame may include an insulating material such as plastic. The insulating frame may cover front sides of the plurality of battery cells 121. The insulating frame may support the integrated circuit, the bus bars, the sensing plates, the sensing bars, the temperature sensors, and the wires.

The bus bars may be short-circuited to positive electrode leads of more battery cells 121 of a first bank and negative electrode leads of one or more battery cells 121 of a last bank. The bus bars may be welded to the positive electrode leads of the battery cells 121 of the first bank and the negative electrode leads of the one or more battery cells 121 of the last bank. Resulting voltages of the plurality of battery cells 121 of the battery cell assembly 120 may be output through the bus bars. The bus bars may be fixed to the insulating frame.

The integrated circuit may be mounted on the insulating frame. The positive electrode leads and the negative electrode leads that are welded together may form nodes inside the battery cell assembly 120. The integrated circuit may be configured to measure voltages of the nodes through the sensing plates and the sensing bars.

The sensing bars may include a conductive material. The sensing bars may have a rod shape. The sensing bars may be short-circuited to the bus bars. The sensing bars may be coupled to the bus bars. Voltages of the bus bars may be measured through the sensing bars.

Each of the sensing plates may have a patch shape or a pad shape. The sensing plates may include a conductive material. The sensing plates may be short-circuited to corresponding ones of the positive electrode leads and the negative electrode leads of the plurality of battery cells 121.

Each of the sensing plates may be connected to the integrated circuit. Voltages of the nodes inside the battery cell assembly 120 may be measured through the sensing plates.

The temperature sensors may be configured to measure temperatures at a plurality of points on the battery cell assembly 120. The temperature sensors may be spatially arranged and thus a temperature distribution in the battery cell assembly 120 may be measured.

The insulating cover may include an insulating material such as plastic. The insulating cover may be interference-fitted into the insulating frame. The insulating cover may cover the integrated circuit, the bus bars, the sensing plates, the sensing bars, and the temperature sensors and thus electrical elements of the first and second integrated circuit assemblies may be protected.

The side beams 125 may be spaced apart from each other with the plurality of battery cells 121 therebetween. Shapes of the side beams 125 may be substantially the same. The side beams 125 may include aluminum. The side beams 125 may be provided by the extrusion process. The side beams 125 may be symmetrically arranged with respect to the plurality of battery cells 121. Each of the side beams 125 may include a plate portion 125P and a coupling portion 125C. Each of the side beams 125 may have roughly a shape of Γ that is a Greek character.

The plate portion 125P of each of the side beams 125 may have a flat plate shape perpendicular to the X-axis direction. The coupling portion 125C of each of the side beams 125 may include a plurality of bolting holes. The fixing devices 128 and the fixing devices 129 may be coupled to the coupling portion 125C of each of the side beams 125. The fixing devices 128 may allow the side beams 125 and the cross-beams 117 and 118 to be fixed to each other. The fixing devices 129 may allow the side beams 125 and the lifting bands 127 to be fixed to each other.

Each of the side beams 125 may include a groove 125G. The lifting band 127 may be inserted into the groove 125G. The lifting band 127 may include a metallic material. The lifting band 127 may include first to seventh portions 127P1, 127P2, 127P3, 127P4, 127P5, 127P6, and 127P7.

The first portion 127P1 may extend in the X-axis direction. The first portion 127P1 may overlap the plurality of battery cells 121 in the Z-axis direction. The first portion 127P1 may be in contact with the plurality of battery cells 121. The first portion 127P1 may support the plurality of battery cells 121, so that sagging of the plurality of battery cells 121 may be prevented or alleviated when the plurality of battery cell assemblies 120 are placed on the pack housing 110 or when the plurality of battery cell assemblies 120 are pulled up from the pack housing 110.

The second portion 127P2 and the third portion 127P3 may be connected to the first portion 127P1. The second portion 127P2 and the third portion 127P3 may be spaced apart from each other with the first portion 127P1 therebetween. The second portion 127P2 and the third portion 127P3 may extend in the Z-axis direction. The lifting band 127P may include a bent portion between the second portion 127P2 and the first portion 127P1, and a bent portion between the third portion 127P3 and the first portion 127P1. The second portion 127P2 of the lifting band 127P may cover the cross-beam 125. The third portion 127P3 of the lifting band 127P may cover the cross-beam 125.

The fourth portion 127P4 may be connected to the second portion 127P2. The fourth portion 27P4 may be spaced apart from the first portion 127P1 with the second portion 127P2 therebetween. The fourth portion 127P4 may extend in the X-axis direction. The lifting band 127P may include a bent portion between the fourth portion 127P4 and the second portion 127P2. The fourth portion 127P4 may include bolting holes 127H for coupling with the fixing devices 129. The fourth portion 127P4 may be inserted into the groove 125G of the side beam 125.

The fifth portion 127P5 may be connected to the third portion 127P3. The fifth portion 127P5 may be spaced apart from the first portion 127P1 with the third portion 127P3 therebetween. The fifth portion 127P5 may extend in the X-axis direction. The lifting band 127P may include a bent portion between the fifth portion 127P5 and the third portion 127P3. The fifth portion 127P5 may include bolting holes 127H for coupling with the fixing devices 129. The fifth portion 127P5 may be inserted into the groove 125G of the side beam 125.

The sixth portion 127P6 may be connected to the fourth portion 127P4. The sixth portion 127P6 may be spaced apart from the second portion 127P2 with the fourth portion 127P4 therebetween. The sixth portion 127P6 may extend in the Z-axis direction. The lifting band 127P may include a bent portion between the sixth portion 127P6 and the fourth portion 127P4.

The seventh portion 127P7 may be connected to the fifth portion 127P5. The seventh portion 127P7 may be spaced apart from the third portion 127P3 with the fifth portion 127P5 therebetween. The seventh portion 127P7 may extend in the Z-axis direction. The lifting band 127P may include a bent portion between the seventh portion 127P7 and the fifth portion 127P5.

TIM layers 140 may be provided on the base plate 111 of the pack housing 110. The TIM layers 140 may be interposed between each of the plurality of battery cell assemblies 120 and the base plate 111. The TIM layers 140 may include a resin composition. The TIM layers 140 may be provided by a thermal resin application process.

FIG. 2 illustrates that there are no TIM layers 140 on a central part of each of the plurality of battery cell assemblies 120 in the Y-axis direction and two TIM layers 140 correspond to each of the plurality of battery cell assemblies 120 (i.e., two TIM layers 143 overlap each of the plurality of battery cell assemblies 120 in the Z-axis direction) but is only an example and does not limit the technical idea of the present disclosure in any sense.

The first portion 127P1 of the lifting band 127 of each of the plurality of battery cell assemblies 120 may be interposed between the TIM layers 140 in the Y-axis direction. The first portion 127P1 of the lifting band 127 of each of the plurality of battery cell assemblies 120 may be at the same level with respect to the TIM layers 140 and the mounting surface 111M of the base plate 111.

The resin composition may be a composition that is curable at room temperature. That is, a curing reaction of the resin composition may start and proceed at room temperature. The curing reaction of the resin composition may be promoted at a temperature higher than room temperature. A curing reaction rate of the resin composition at a temperature higher than room temperature may be higher than a curing reaction rate of the resin composition at room temperature. As a non-limiting example, a major component of the resin composition may be a silicon resin, a polyol resin, an epoxy resin, or an acrylic resin.

A curing agent of the resin composition may be selected according to the major component of the resin composition. For example, the curing agent may be a siloxane compound when the major component of the resin composition is a silicone resin, may be an isocyanate compound when the major component of the resin composition is a polyol resin, may be an amine compound when the major component of the resin composition is an epoxy resin, and may be an isocyanate compound when the major component of the resin composition is an acrylic resin.

An inorganic filler of the resin composition may have relatively high thermal conductivity. According to embodiments, the thermal conductivity of the inorganic filler of the resin composition may be about 1 W/mK or more. According to embodiments, the thermal conductivity of the inorganic filler of the resin composition may be about 5 W/mK or more. According to embodiments, the thermal conductivity of the inorganic filler of the resin composition may be about 10 W/mK or more. According to embodiments, the thermal conductivity of the inorganic filler of the resin composition may be about 15 W/mK or more.

According to embodiments, the inorganic filler of the resin composition may include ceramic. For example, the inorganic filler of the resin composition may include aluminum oxide (Al₂O₃), aluminum nitride (AlN), boron nitride (BN), silicon nitride (Si₃N₄), silicon carbide (SiC), beryllium oxide (BeO), zinc oxide (ZnO), aluminum hydroxide (Al(OH)₃), or boehmite. The resin composition may include a carbon filler. The resin composition may include, for example, fumed silica, clay, or calcium carbonate.

Each of the tapes 30 may be on the base plate 111. The tapes 130 may be interposed between the TIM layers 140 and the base plate 111. According to embodiments, each of the tapes 130 may include the same material as the base plate 111. Each of the tapes 130 may be, for example, an aluminum tape. The tapes 130 may be in contact with each of the TIM layers 140 and the base plate 111. The tapes 130 may cover the base plate 111 and thus each of the TIM layers 140 may not be in contact with the base plate 111. Each of the TIM layers 140 may be spaced apart from the base plate 111.

According to embodiments, the tapes 130 may include aluminum. The tapes 130 including aluminum may have high thermal conductivity, thus preventing degradation of cooling performance of the battery pack 100. In addition, the tapes 130 including aluminum may have an adhesive force in an appropriate range with respect to the TIM layers 140.

The friction relief sheets 151 may be interposed between the side beam 125 and the cross-beam 117 and between the side beam 125 and the cross-beam 118. The friction relief sheets 151 may be adhered to the side beams 125 or the cross-beams 117 and 118.

Each of the friction relief sheets 151 may include Teflon but is not limited thereto. The friction relief sheets 151 may reduce a frictional force between the side beams 125 and the cross-beams 117 and 118 when the plurality of battery cells 125 are placed on or lifted from the pack housing 110.

According to embodiments, the tapes 130 may isolate the base plate 111 and the TIM layers 140 to prevent direct contact between the base plate 111 and the TIM layers 140, and thus, when one of the battery cell assemblies 120 is removed, corresponding TIM layers 140 may be efficiently removed . According to embodiments, the tapes 130 are interposed between the TIM layers 140 and the base plate 111, so that the battery cell assemblies 120 and the base plate 111 may be separated even after the TIM layers 140 are cured.

In this case, in use of the battery pack 100, the plurality of battery cells 121 may swell and a normal force between the side beam 125 and the cross-beams 117 and 118 may increase. According to embodiments, the friction relief sheets 151 are interposed between the side beam 125 and the cross-beam 117 and between the side beam 125 and the cross-beam 118 and thus even when the plurality of battery cells 121 swell, the battery cell assemblies 120 may be easily lifted from the pack housing 110.

The battery pack 100 may include exhaust devices. The exhaust devices may be coupled to one of the side walls 112, 113, 114, and 115. The side walls 112, 113, 114, and 115 coupled to the exhaust devices may include exhaust paths connected to the exhaust devices. The exhaust devices may be configured to delay thermal propagation by discharging a high-temperature gas from the inside of the battery pack 100 to the outside when at least one of the plurality of battery cell assemblies 120 is in a thermal runaway state.

Here, a thermal runaway state of the plurality of battery cell assemblies 120 is a state in which a change of temperature of the plurality of battery cell assemblies 120 accelerates the change of temperature, i.e., uncontrollable positive feedback. A temperature of the plurality of battery cell assemblies 120 that are in the thermal runaway state sharply increases, and a large amount of a high-pressure gas and combustion debris are discharged.

The battery pack 100 may include lid coupled to the side walls 112, 113, 114, and 115. The lid may cover elements, such as the battery cell assemblies 120 and electronic components, inside the battery pack 100. The lid may be fixed to the battery pack 100 by a mechanical coupling means, e.g., a bolt.

The battery pack 100 may further include inter-bus bars. Due to the inter-bus bars, the plurality of battery cell assemblies 120 may be connected in series, and the battery pack 100 may output a high voltage.

The battery pack 100 may further include electronic components. The electronic components may be provided in the pack housing 110. The electronic components may be between the plurality of battery cell assemblies 120 and one of the side walls 112, 113, 114, and 115 on which the exhaust devices are installed.

The electrical components may include, for example, a BMS. The BMS may be configured to monitor, balance, and control the battery pack 100. The monitoring of the battery pack 100 may include measuring voltages and currents of certain nodes in the plurality of battery cell assemblies 120 and measuring temperatures at set positions in the battery pack 100. The battery pack 100 may include sensors for measuring a voltage, a current, and temperature as described above.

The balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions, thereby preventing a decrease in the lifespan of each of the plurality of battery cell assemblies 120.

The electronic components may further include a cooling device, a power relay assembly (PRA), a safety plug, etc. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and the external load, when an abnormal voltage such as a voltage surge occurs.

### (Second embodiment)

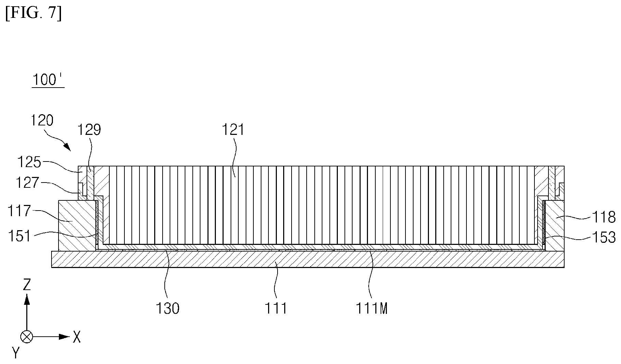

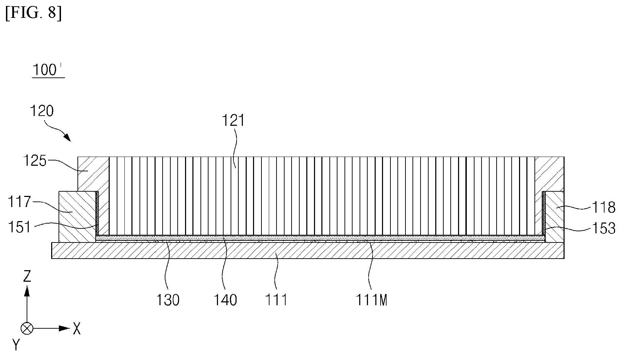

FIGS. 7 and 8 are a cross-sectional views for describing a battery pack 100' according to other embodiments. Referring to FIGS. 1 to 6, the battery pack 100' may include a pack housing 110, a plurality of battery cell assemblies 120, tapes 130, TIM layers 140, and friction relief sheets 151 and 153. The battery pack 100' is a final form of a battery system to be mounted in a mobility or the like.

The pack housing 110, the plurality of battery cell assemblies 120, the tapes 130, the TIM layers 140, and the friction relief sheets 151 are substantially the same as those described above with reference to FIGS. 1 to 6, and thus, redundant description thereof is omitted here.

Referring to FIGS. 7 and 8, the friction relief sheets 153 may be interposed between side beam 125 and a cross-beam 117 and between the side beam 125 and a cross-beam 118. The friction relief sheets 151 may be adhered to the side beams 125, and the friction relief sheets 153 may be adhered to the cross-beams 117 and 118. Each of the friction relief sheets 153 may include Teflon but is not limited thereto. According to embodiments, by additionally providing the friction relief sheets 153 between the side beams 125 and the cross-beams 117 and 118, the battery cell assemblies 120 may be more easily lifted from the pack housing 110 even when the plurality of battery cells 121 swell.

### (Third Embodiment)

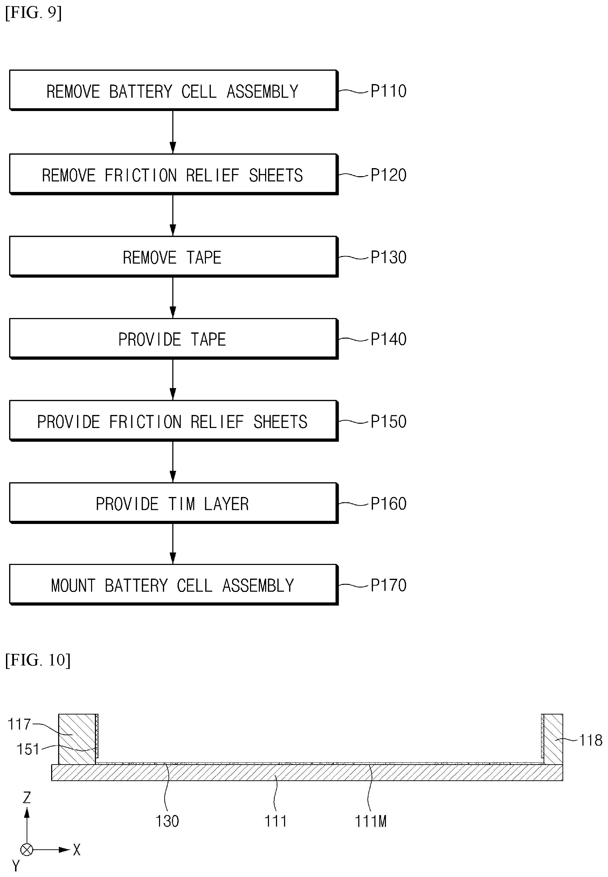

FIG. 9 is a flowchart of a secondary battery manufacturing method according to embodiments.

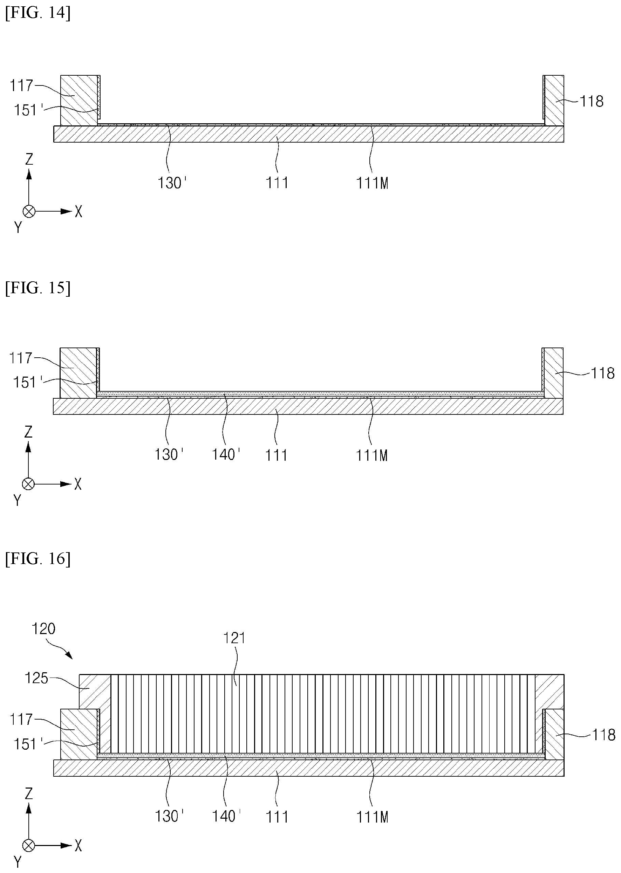

FIGS. 10 to 16 are cross-sectional views for describing a secondary battery manufacturing method according to embodiments. FIGS. 9 to 15 are cross-sectional views of a part corresponding to FIG. 6.

Referring to FIGS. 5, 9, and 10, in P110, the battery cell assembly 120 may be removed. The battery cell assembly 120 may be easily separated from the tape 130, because an adhesive force between the tape 130 and the TIM layers 140 is lower than an adhesive force between the base plate 111 and the TIM layers 140. In addition, even when the plurality of battery cells 121 of the battery cell assembly 120 swell, a frictional force in a vertical direction (i.e., the Z-axis direction) decreases due to the friction relief sheet 151 and thus the battery cell assembly 120 may be easily removed.

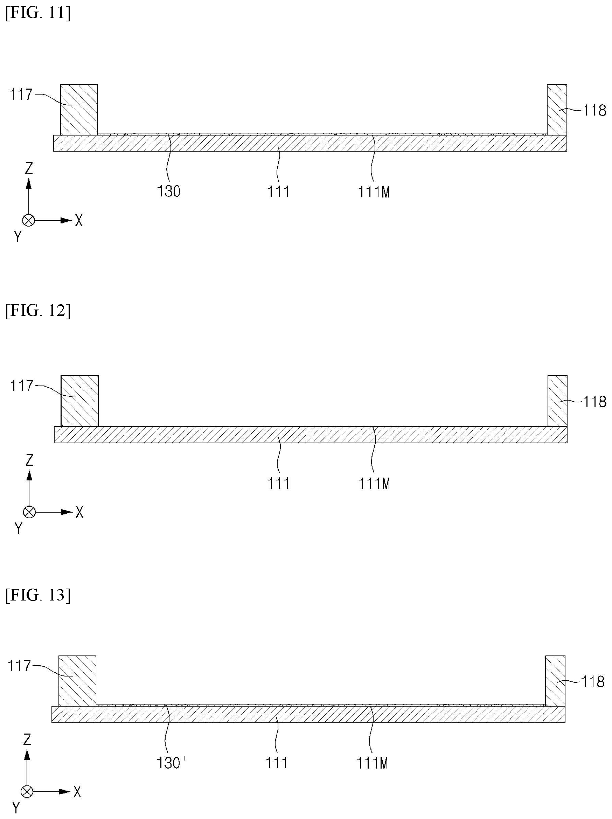

Next, referring to FIGS. 9, 10, and 11, in P120, the friction relief sheets 151 may be removed. In the present example, the friction relief sheets 151 attached to the cross-beams 117 and 118 are removed. In an example in which the friction relief sheets 151 are attached to the battery cell assembly 120 (see FIG. 5), the friction relief sheets 151 are removed together with the battery cell assembly 120 and thus P120 may be omitted. Unlike in FIG. 11, the TIM layers 140 may partially remain on the tape 130.

Next, referring to FIGS. 9, 11, and 12, in P130, the tape 130 may be removed. The tape 130 may be separated by a mechanical method or a chemical method. In P130, remaining portions of the TIM layers 140 (see FIG. 10) may be removed together with the tape 130.

Next, referring to FIGS. 9, 12, and 13, in P140, a tape 130' may be provided. The tape 130' may be attached to the base plate 111.

Next, referring to FIGS. 9, 13, and 14, in P150, a friction relief sheet 151' may be provided. In the present example, the friction relief sheet 151' is attached to the cross-beams 117 and 118. In an example in which the friction relief sheet 151' is attached to the battery cell assembly 120 (see FIG. 5), P150 may be omitted.

Next, referring to FIGS. 9, 14, and 15, in P160, TIM layers 140' may be provided. The TIM layers 140' may be provided by the thermal resin application process. The TIM layers 140' may be applied onto the tape 130'.

Next, referring to FIGS. 9, 14, and 16, in P170, the battery cell assembly 120 may be mounted on the base plate 111. The battery cell assembly 120 may be fixed to the tape 130' through the TIM layers 140'.

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A battery pack comprising:
a base plate;
a thermal interface material (TIM) layer on the base plate; and
a battery cell assembly on the TIM layer,
wherein the battery cell assembly includes a plurality of battery cells arranged in a first direction, first and second side beams spaced apart from each other in the first direction with the plurality of battery cells between the first and second side beams, and a lifting band coupled to the first and second side beams.

2. The battery pack of claim 1, wherein the lifting band includes a first portion between the base plate and the plurality of battery cells.

3. The battery pack of claim 2, wherein the first portion of the lifting band is at the same level as the TIM layer with respect to a mounting surface of the base plate.

4. The battery pack of claim 3, wherein the lifting band further includes a second portion connected to the first portion and covering the first side beam, and a third portion connected to the first portion and covering the second side beam.

5. The battery pack of claim 4, wherein the lifting band further includes a fourth portion connected to the second portion and including a bolting hole, and a fifth portion connected to the third portion and including a bolting hole.

6. The battery pack of claim 5, further comprising a cross-beam on the base plate, wherein the cross-beam extends in a second direction perpendicular to the first direction.

7. The battery pack of claim 6, wherein the cross-beam includes a groove into which the fourth portion of the lifting band is inserted.

8. The battery pack of claim 6, wherein the battery cell assembly includes a fixing device that fixes the lifting band and the first side beam to each other.

9. The battery pack of claim 6, further comprising a first friction relief sheet between the cross-beam and the first side beam.

10. The battery pack of claim 9, wherein the first friction relief sheet is adhered to the cross-beam or the first side beam.

11. The battery pack of claim 9, further comprising a second friction relief sheet between the cross-beam and the first side beam.

12. The battery pack of claim 11, wherein the first friction relief sheet is adhered to the first side beam, and the second friction relief sheet is adhered to the cross-beam.

13. The battery pack of claim 1, further comprising a tape between the base plate and the TIM layer.

14. The battery pack of claim 13, wherein the tape includes aluminum.

15. The battery pack of claim 13, wherein the tape includes the same material as the base plate.

16. A battery pack comprising:
a base plate;
a cross-beam on the base plate;
a thermal interface material (TIM) layer on the base plate;
a battery cell assembly on the TIM layer,
wherein the battery cell assembly includes a plurality of battery cells, first and second side beams spaced apart from each other in a first direction with the plurality of battery cells interposed between the first and second side beams, and a lifting band coupled to the first and second side beams; anda first friction relief sheet between the cross-beam and the first side beam.

17. The battery pack of claim 16, wherein the first friction relief sheet is adhered to the cross-beam or the first side beam.

18. The battery pack of claim 16, further comprising a second friction relief sheet between the cross-beam and the first side beam.

19. The battery pack of claim 18, wherein the first friction relief sheet is adhered to the first side beam, and the second friction relief sheet is adhered to the cross-beam.
